# EUROPÄISCHE PATENTANMELDUNG

(11) **EP 1 770 285 A1**
(43) Veröffentlichungstag der Anmeldung: **04.04.2007**
(21) Anmeldenummer: 06019120.2
(22) Anmeldetag: 13.09.2006
(51) Int. Cl.: F16B 47/00

(54) **Gerätehalter-Saugfuß mit Kolben-Zylinder-Anordnung**

(30) Priorität: 30.09.2005 DE 102005046869
(71) Anmelder: Richter, Harald, 75331 Engelsbrand (DE)
(72) Erfinder: Richter, Harald, 75331 Engelsbrand (DE)
(74) Vertreter: Gallo, Wolfgang

(57) **Zusammenfassung**

Saugfuß für Gerätehalter oder andere Vorrichtungen, bestehend aus einem unten, nämlich zu seiner Saugseite hin offenen Gehäuse (1) mit einem umlaufend geschlossenen und mit einer Dichtung (2) versehenen Gehäuserand sowie einer in dem Gehäuse gebildeten Zylinderwand (11), weiter mit einem in dem von der Zylinderwand (11) umschlossenen Zylinderraum axial verschiebbar angeordneten, gegen die Zylinderwand abdichtenden (5) Kolben (4), und mit einem Betätigungsmechanismus, der aus einem mit dem Kolben (4) verbundenen, durch eine Gehäuseöffnung nach oben aus dem Gehäuse herausragenden Schaft (41, 8) und einem mit diesem zusammenwirkenden, außerhalb des Gehäuses (1) angeordneten Betätigungsorgan (6, 9, 10) zum Bewirken einer wahlweisen Axialbewegung des mit dem Kolben verbundenen Schafts.

## Beschreibung

Saugfüße an Geräteträgern für Kleincomputer, auch als PDAs bezeichnet, mobile Navigationsgeräte, Mobiltelefone und dergleichen sind bekannt (z.B. DE 103 11 112 A1). Sie dienen zum lösbaren schnellen Anbringen solcher Geräteträger an Windschutzscheiben, Armaturenbrettern oder an fest angebrachten, eine glatte Fläche bereitstellenden Tellern.

Die bekannten Saugfiiße haben eine den Boden einer Gehäuseglocke bildende flexible Saugmembran, an deren Mitte ein Stempel befestigt ist, mit dem ein Betätigungshebel gekuppelt ist, um die Saugmembran wahlweise zwischen einer in die Gehäuseglocke hineingezogenen Arbeitsstellung, also Saugstellung, und einer flachen unwirksamen Stellung bewegen zu können.

Da die Saugmembran funktionsnotwendig beweglich sein muß, kann die Gehäuseglocke nicht an der Saugmembran befestigt sein. In der Arbeitsstellung der Saugmembran wird zwar die Gehäuseglocke durch die erzeugte Haltekraft gegen den Rand der Saugmembran gepresst, aber die gesamte Haltekraft wird in Gestalt einer Zugkraft von der gespannten Saugmembran aufgenommen. Bei Hitzeeinwirkung durch Sonneneinstrahlung, wie das bei Betrieb des Saugfußes an der Windschutzscheibe von Kraftfahrzeugen unvermeidlich ist, erfolgt eine Ausgasung von Weichmacher aus der Saugmembran, mit der Folge, daß diese dazu neigt, mit dem Rand der Gehäuseglocke zu verkleben, was Funktionsstörungen verursacht, und eine allmählich einsetzenden Versprödung.

Aufgabe der Erfindung ist es, die aufgezeigten Probleme zu bearbeiten und eine noch vorteilhaftere Saugfußkonstruktion zu schaffen.

Diese Aufgabe wird gemäß der Erfindung durch die im Anspruch 1 angegebene Anordnung gelöst. Vorteilhafte Ausgestaltungen und Weiterbildungen der Erfindung sind Gegenstand der Unteransprüche.

Der erfindungsgemäße Saugfuß arbeitet nach dem Kolben-Zylinder-Prinzip. Sie hat den Vorteil, daß, während bei einer Saugmembran nur deren Mittenbereich bewegt wird und damit ein Unterdruckvolumen in Gestalt eines flachen Kegels erzeugt wird, bei dem erfindungsgemäßen Saugfuß durch die Bewegung des Kolbens ein sich auf dessen gesamter Fläche vergrößerndes Unterdruckvolumen erzeugt wird. Dies bedeutet, daß ein solcher Saugfuß nach der Erfindung gegenüber einem herkömmlichen Saugmembran-Saugfuß bei gleicher Haltekraft mit wesentlich geringerem Durchmesser ausgebildet werden kann. Außerdem sitzt der erfindungsgemäße Saugfuß in seiner Arbeitsstellung fester und stabiler auf der Haltefläche, an der er festgesaugt ist, da die Haltekräfte über den Saugfußrand unmittelbar auf die Haltefläche übertragen.

Einige Ausführungsbeispiele der Erfindung werden nachstehend unter Bezugnahme auf die anliegenden Zeichnungen mehr im einzelnen beschrieben. In den Zeichnungen zeigt:
- Die Fig. 1 und 2: einen Saugfuß nach der Erfindung in der Lösestellung und in der Saugstellung jeweils im Axialschnitt,
- die Fig. 3 bis 6: zwei weitere, hinsichtlich der Betätigungsmechanik abgewandelte Ausführungsformen eines Saugfußes nach der Erfindung, und
- die Fig. 7 bis 10: weitere, hinsichtlich der Dichtungsausbildung abgewandelte Ausführungsformen eines Saugfußes nach der Erfindung.

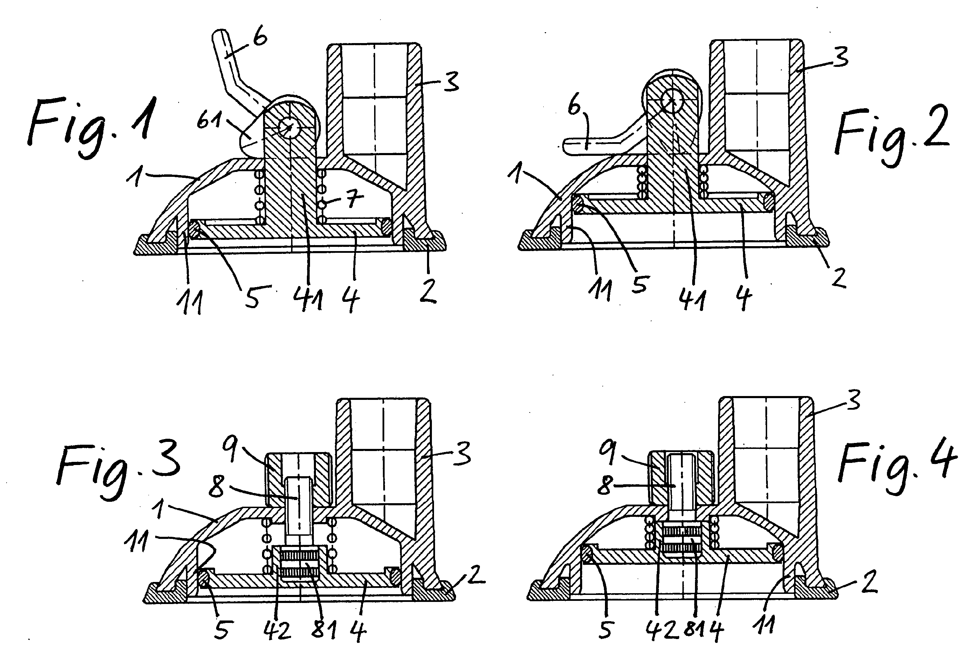

Die Fig. 1 und 2 zeigen jeweils im Schnitt in der Ruhestellung (Fig. 1) und in der Arbeitsstellung (Fig. 2) anhand eines ersten Ausführungsbeispiels den grundsätzlichen Aufbau eines Saugfußes nach der Erfindung.

Der Saugfuß besteht aus einem Gehäuse 1, das an seiner Unterseite offen ist. Der untere Umfangsrand des Gehäuses 1, der zur Anlage an einer Haltefläche bestimmt ist, an welcher der Saugfuß durch Festsaugen fixiert werden soll, ist mit einer umlaufenden Dichtung 2 aus Gummimaterial oder einem weichen Kunststoff versehen. Im Gehäuse 1 ist eine Zylinderwand 11 angeformt, die einen nach unten offenen Zylinder kurzer axialer Länge bildet. An dem Gehäuse 1 ist außerdem ein Anschlussstück 3 angeformt, das beim Ausfiihrungsbeispiel nach den Fig. 1 und 2 die Gestalt eines Rohrstutzens hat, und das zum Anschluß beispielsweise eines Schwanenhalses, einer Säule, eines Gelenks oder eines anderen Bauteils eines Geräteträgers dient. Es versteht sich, daß das Anschlussstück 3 keinen Bestandteil der Erfindung darstellt und jede beliebige Form haben kann, die durch die Gegebenheiten des damit zu verbindenden Bauteils bestimmt wird. Es versteht sich außerdem, daß statt eines Anschlussstücks zur Befestigung eines weiteren Bauteils ein Bauteil des Geräteträgers, beispielsweise eine Säule, direkt am Gehäuse 1 angeformt sein kann.

Innerhalb des von der Zylinderwand 11 umschlossenen Zylinderraums ist ein scheibenförmiger Kolben 4 axial verschiebbar angeordnet, der an seinem Umfang eine Dichtung 5 trägt und über diese dichtend mit der Innenwandfläche der Zylinderwand 11 zusammenwirkt. Der Kolben 4 ist mit einem mittig angeformten Kolbenschaft 41 ausgebildet, der durch eine entsprechende Öffnung im Gehäuse 1 nach oben aus dem Gehäuse herausragt und oberhalb des Gehäuses mit einem Betätigungshebel 6 verbunden ist, der seinerseits mit einem sich auf der Gehäuseoberseite abstützenden Nocken 61 drehfest verbunden ist. Zwischen dem Kolben 4 und der oberen Gehäusewand ist eine den Kolbenschaft 41 umgebende Druckfeder 7 eingesetzt, die den Kolben 4 nach unten in seine Ruhestellung (Fig. 1) vorspannt.

Wird der Betätigungshebel 6, der beim dargestellten Ausführungsbeispiel in der Ruhestellung nach oben ragt, heruntergedrückt, wird der damit drehfest verbundene Nocken 61 mitgedreht und bewirkt wegen dessen exzentrischer Ausbildung ein Anheben des Kolbenschafts 41 relativ zum Gehäuse 4 und damit eine Verschiebung des Kolbens 4 in dem von der Zylinderwand 11 umschlossenen Zylinderraum entgegen der Vorspannkraft der Feder 7 nach oben. Dadurch wird das Volumen, das indem von der Zylinderwand 11 bzw. dem unteren Gehäuserandsbereich zwischen der Haltefläche und dem Kolben 4 vorhanden ist, vergrößert, wodurch eine entsprechende Saugkraft erzeugt wird. Aufgrund dieser Saugkraft wird der Saugfuß mit seinem die Dichtung 2 aufweisenden Umfangsrand des Gehäuses 1 fest gegen die Haltefläche gepresst.

Es versteht sich, daß statt eines am Kolben 4 angeformten Kolbenschafts 41 auch ein anderes, mit dem Kolben verbundenes Bauteil mit Kolbenschaftfunktion und statt des Betätigungshebels 6 ein anderes Betätigungsorgan Anwendung finden kann, um einen Betätigungsmechanismus für den Kolben 4 zu dessen Bewegung zwischen der Ruheposition (Fig. 1) und der demgegenüber angehobenen Arbeitsposition nach Fig. 2 herzustellen.

Gehäuse, Kolben und vorzugsweise auch der Betätigungshebel sind als Kunststoffspritzgussteile ausgebildet.

Die Fig. 3 und 4 zeigen, wiederum im Schnitt und in der Ruhestellung (Fig. 3) und in der Arbeitsstellung (Fig. 4) eine hinsichtlich des Betätigungsmechanismus für den Kolben 4 gegenüber der Ausführungsform nach den Fig. 1 und 2 abgewanderte Ausführungsform.

Bei der Ausführungsform nach den Fig. 3 und 4 ist der Kolbenschaft des Kolbens 4 als vorzugsweise metallener Gewindeschaft 8 in Gestalt eines separaten Bauteils ausgebildet, das allerdings einstückig mit dem Kolben 4 verbunden ist, indem der Kolben 4 mit einer angeformten Hülse 42 um einen mit radialen Formschlusselementen versehenen Schaftfuß 81 angespritzt ist. Der Gewindeschaft 8 ragt durch die Gehäuseöffnung nach oben aus dem Gehäuse 1 heraus und steht dort mit eine als Handrad oder dgl. ausgebildeten drehbaren Betätigungselement 9 in Eingriff, das mit einem entsprechenden Innengewinde versehen ist. Durch Drehen des Betätigungselements 9 wird dessen Drehbewegung in eine Hubbewegung des Gewindeschaft 8 mit dem Kolben 4 umgesetzt. Da der Kolben 4 an seinem Umfang über die Dichtung 5 mit der Innenwandung der Zylinderwand 11 eine gute Reibschlussverbindung hat, insbesondere durch den Radius von der Kolbenachse und die entsprechende Umfangslänge, besteht keine Gefahr, daß beim Drehen des Betätigungselements 9 der Kolben 4 mit dem Gewindeschaft 8 mitgedreht wird.

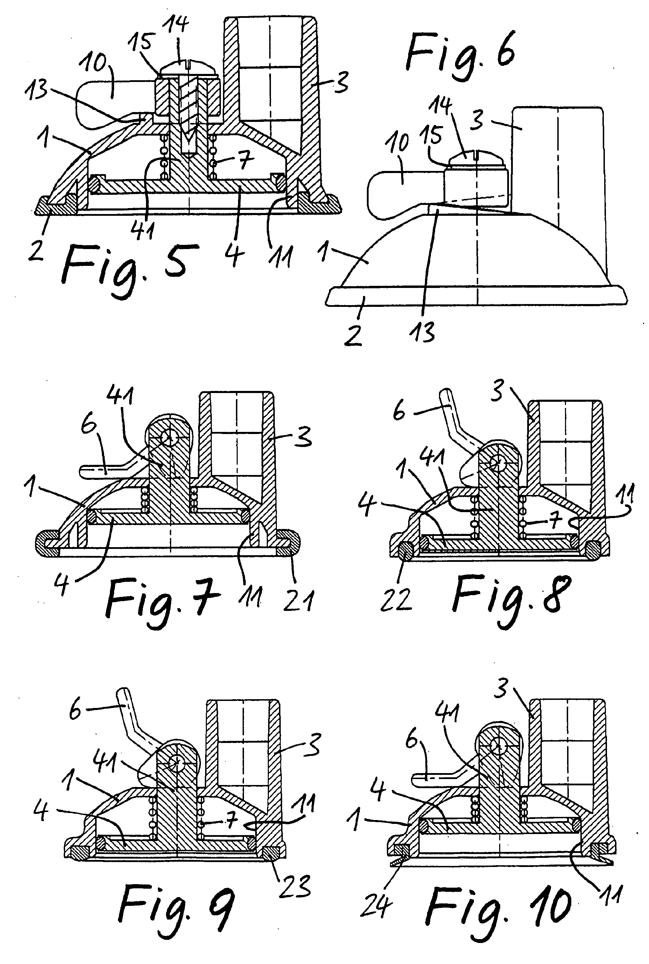

Die Fig. 5 und 6 zeigen im Schnitt und in der Ansicht eine weitere hinsichtlich des Betätigungsmechanismus für den Kolben abgewandelte Ausführungsform. Hier findet wiederum ein drehbares Betätigungselement Anwendung, das hier als radialer Betätigungshebel 10 mit einer angeformten Nabenhülse 12 ausgebildet ist. Am Kolben ist wiederum einstückig ein Kolbenschaft 41 angeformt, in welchem jedoch von oben eine Schraube 44 mit einer Scheibe 45 eingeschraubt ist, wobei die Scheibe 45 auf der oberen Stirnfläche der Nabenhülse 12 aufliegt. Auf der oberen Gehäusewand ist ein um die den Kolbenschaft aufnehmende Gehäuseöffnung herum über einen entsprechenden Bogenabschnitt verlaufender Steg 13 angeformt, dessen Oberseite eine Rampenfläche bildet, auf welcher der radiale Betätigungshebel 10 gleitet. In der Seitenansicht nach Fig. 6 ist dies deutlich erkennbar. Wird nun der Radialhebel 10 im Uhrzeigersinn (beim Ausführungsbeispiel) geschwenkt, wird er durch sein Entlanggleiten auf dem rampenförmigen Steg 13 angehoben und hebt über die Scheibe 15 und die Schraube 14 den Kolbenschaft 41 mit dem Kolben 4 in dessen Saugstellung an.

Die Fig. 7 bis 10 zeigen Ausführungsvarianten in Bezug auf die Ausbildung der Dichtung am unteren Gehäuserand des Gehäuses 1.

Während bei den vorstehend beschriebenen Ausführungsformen die Dichtung 2 am unteren Gehäuserand wie ein Schuh mit O-Profil den unteren Gehäuserand umgreift, hat die Dichtung 21 bei der Ausführungsform nach Fig. 7 zwar ebenfalls ein U-Profil, umgreift aber einen am unteren Gehäuserand gebildeten, radial nach außen ragenden Radialflansch 16 des Gehäuserands unten, seitlich außen und oben.

Bei der Ausführungsform nach Fig. 8 ist in den entsprechend breit ausgebildeten unteren Gehäuserand eine nach unten offene Ringnut gebildet, in welche ein Dichtungsring 22 eingesetzt ist, der, wie dargestellt, als O-Ring oder O-ringartig ausgebildet sein kann, aber auch ein anderes Querschnittsprofil wie beispielsweise rechteckig, trapezförmig oder in sonstiger Weise ausgebildet sein kann.

Die Ausführungsform nach Fig. 9 ist ähnlich der Ausführungsform nach Fig. 8. In Fig. 9 hat ein Dichtungsring 23 eine an der Unterseite, also zur Haltefläche hin, gewölbte rechteckige Querschnittsgrundform.

Bei der Ausführungsform nach Fig. 10 findet eine Lippendichtung 24 Anwendung. Eine solche Dichtungsform hat Vorteile, wenn eine Haltefläche gewölbt ist, wie dies bei Windschutzscheiben von Autos der Fall ist, da sich eine solche Lippendichtung der Wölbung besser anpassen kann wie eine aufgrund ihrer Querschnittsform in sich steifere Dichtung nach einem der vorhergehenden Ausführungsbeispiele. Die Ausführungsform nach Fig. 10 kann beispielsweise auch durch eine im Querschnitt X-förmige Dichtung abgewandelt werden. Weitere Ausführungsformen von Dichtungen am unteren Gehäuserand sind selbstverständlich möglich, die dargestellten Ausführungsbeispiele dienen nur zur Erläuterung der zur Verfügung stehenden Vielfalt.

Es versteht sich auch, daß der erfindungsgemäße Saugfuß nicht nur in Verbindung mit Geräteträgern einsetzbar ist, wie sie typischerweise für mobile Kleincomputer, Navigationsgeräte, Mobiltelefone und dgl. in Kraftfahrzeugen vielfältige Anwendung finden, sondern der erfindungsgemäße Saugfuß kann auch in beliebigen anderen Anwendungsfällen eingesetzt werden, wo immer ein Gerät, ein Gegenstand oder dgl. an einer glatten Haltefläche durch Festsaugen fixiert werden können soll.

Bei allen Ausführungsformen eines Saugfußes nach der Erfindung ist die Außenform des Gehäuses 1 beliebig. Das Gehäuse kann eine kreisförmige Außenform haben, die Außenform, die durch den Gehäuserand mit der daran angeordneten Dichtung bestimmt ist, kann aber auch andere Formen wie beispielsweise oval, polygonartig, oder in anderer Weise gestaltet sein. Es ist lediglich wichtig, daß im Gehäuse eine Zylinderwand 11 gebildet ist, d.h. eine zylindrische Innenwandfläche, mit welcher der Kolben 4 zusammenwirken kann.

## Patentansprüche

1. Saugfuß für Gerätehalter oder andere Vorrichtungen, bestehend aus einem unten, nämlich zu seiner Saugseite hin offenen Gehäuse (1) mit einem umlaufend geschlossenen und mit einer Dichtung (2) versehenen Gehäuserand sowie einer in dem Gehäuse gebildeten Zylinderwand (11), weiter mit einem in dem von der Zylinderwand (11) umschlossenen Zylinderraum axial verschiebbar angeordneten, gegen die Zylinderwand abdichtenden (5) Kolben (4), und mit einem Betätigungsmechanismus, der aus einem mit dem Kolben (4) verbundenen, durch eine Gehäuseöffnung nach oben aus dem Gehäuse herausragenden Schaft (41, 8) und einem mit diesem zusammenwirkenden, außerhalb des Gehäuses (1) angeordneten Betätigungsorgan (6, 9, 10) zum Bewirken einer wahlweisen Axialbewegung des mit dem Kolben verbundenen Schafts besteht.

2. Saugfuß nach Anspruch 1 wobei das Betätigungsorgan ein mit einem Exzenternocken (61) versehener kippbarer und mit dem Schaft (41) verbundener Betätigungshebel (6), oder ein drehbares, mit dem Schaft (8) über eine Schraubgewindeverbindung zusammenwirkendes Betätigungselement (9), oder ein mit einer am Gehäuse (1) angeordneten Rampe (13) zusammenwirkenden und mit dem Schaft (41) verbundener Schwenkhebel (10) ist.

3. Saugfuß nach Anspruch 1 oder 2, wobei der Kolben (4) an seinem Umfang mit einem Dichtungsring (5) versehen ist, der dichtend mit der Zylinderwand (11) zusammenwirkt.

4. Saugfuß nach einem der Ansprüche 1 bis 3, wobei die Zylinderwand (11) im Gehäuse als zylindrischer Wandsteg radial innerhalb des mit der Dichtung (2) versehenen äußeren Gehäuserands angeformt oder angeordnet ist.

5. Saugfuß nach einem der Ansprüche 1 bis 4, wobei die Dichtung am Gehäuserand als Dichtungsring (2, 21) mit einem den Gehäuserand umgreifenden U-förmigen Profil, oder als in eine stimseitig angeordnete Ringnut des Gehäuserands eingesetzter Dichtungsring (22, 23) mit rundem, polygonartigem oder anderem Querschnitt, oder als am Gehäuserand angebrachter Lippendichtungsring (24) ausgebildet ist.

6. Saugfuß nach einem der Ansprüche 1 bis 5, wobei zwischen dem Gehäuse und dem Kolben (4) eine den Schaft (41, 8) umgebende Druckfeder (7) eingesetzt ist.
